Europäisches Patentamt

European Patent Office

Office européen des brevets

(19)

(11) Veröffentlichungsnummer: **0 325 972**

**A2**

(12)

# EUROPÄISCHE PATENTANMELDUNG

(21) Anmeldenummer: **89100615.7**

(22) Anmeldetag: **14.01.89**

(51) Int. Cl.⁴: **F01P 5/06 , F01P 3/18**

(30) Priorität: **29.01.88 US 149791**

(43) Veröffentlichungstag der Anmeldung:
**02.08.89 Patentblatt 89/31**

(84) Benannte Vertragsstaaten:
**BE DE ES FR GB IT NL**

(71) Anmelder: **DEERE & COMPANY**
**1 John Deere Road**
**Moline Illinois 61265(US)**

(72) Erfinder: **Turner, Alec Frederick**
**23447 Riverside Drive**
**Southfield Michigan 48034(US)**

(74) Vertreter: **Feldmann, Bernhard et al**
**DEERE & COMPANY European Office, Patent**
**Department Steubenstrasse 36-42 Postfach**
**503**
**D-6800 Mannheim 1(DE)**

(54) **Kühleranordnung, insbesondere für einen Fahrzeugantrieb.**

(57) Das Kühlsystem besteht aus Lüftern und Wärmetauschern, welche in einem gemeinsamen Gehäuse um eine Achse schwenkbar angeordnet sind, wobei die Antriebswelle für die Lüfter koaxial zur Schwenkachse verläuft. Dies erlaubt bei Motorbetrieb ein Verschwenken der gesamten Kühleinheit (10) aus dem Bereich eines Fahrzeugmotors (28), wobei ein Zugang zu dem Motor (28) für Wartungs- und Reparaturarbeiten möglich wird, ohne daß der Kühlkreis zwischen Kühlsystem und Motor (28) unterbrochen wird. Vorzugsweise sind Lüfter (14, 16) und Wärmetauscher (20, 22) nebeneinander und benachbart zueinander in einem Gehäuse angeordnet, wobei bei einer Lage des Kühlsystems oberhalb der Antriebsmaschine (28) lediglich ein minimaler vertikaler Abstand beansprucht wird. Das Kühlsystemgehäuse (28) bildet einen Strömungskanal, welcher die Wärmetauscher (20, 22) mit den Lüftern (14, 16) verbindet. Es können ein oder mehrere Axiallüfter (14, 16) oder auch Transversallüfter verwendet werden.

FIG. 1

## Kühleranordnung, insbesondere für einen Fahrzeugantrieb

Die Erfindung betrifft eine Kühleranordnung, insbesondere für einen Fahrzeugantrieb, welche an einer Halterung befestigt ist und in einem Gehäuse wenigstens eine Lüftereinrichtung und wenigstens ein Wärmetauscherelement aufnimmt, wobei das Gehäuse einen Strömungskanal zwischen der Lüftereinrichtung und dem Wärmetauscherelement bildet.

Eine derartige Kühleranordnung ist durch die US-A-4 372 409 bekanntgeworden. Dort sind ein Transversallüfter und ein Wärmetauscher in einem gemeinsamen Gehäuse untergebracht. Der Lüfter saugt die Kühlluft durch den Wärmetauscher an. Die gesamte Anordnung ist in konventioneller Weise stationär im vorderen Bereich des Fahrzeuges angeordnet. Die Luft wird somit von der Fahrzeugvorderseite angesaugt und auf der Rückseite des Lüfters ausgestoßen.

Bei einigen Anwendungen, z. B. bei Wasserfahrzeugen bzw. Amphibienfahrzeugen, ist diese Technik nicht brauchbar. Hier kann die Kühlluft nur oberhalb des Fahrzeuges angesaugt werden. Auch der Ausstoß der Kühlluft erfolgt zweckmäßigerweise oberhalb des Fahrzeuges. Ähnlich liegen die Verhältnisse bei militärischen Anwendungen. Die Bedrohung durch feindliche Waffen erfordert einen Panzerschutz auf allen Seiten des Fahrzeuges, so daß die Kühlluft nur im Bereich des Fahrzeugdaches angesaugt und ausgestoßen werden kann. Für derartige Fahrzeuge muß daher ein Kühlsystem so konstruiert werden, daß die Zufuhr und der Ausstoß der Kühlluft von der Oberseite des Fahrzeuges aus erfolgen kann.

Ferner ist infolge unterschiedlicher Fahrzeugkonstruktionsparameter für verschiedene militärische Bedingungen die einzige mögliche Lage für das Kühlsystem unmittelbar oberhalb des Fahrzeugantriebs, d. h. oberhalb des Motors und/oder des Getriebes, gegeben. In bestimmten Amphibienfahrzeugen sind der Motor, der Kühler, der Kühllüfter und das Getriebe zu einer einzigen Baueinheit zusammengefügt, welche zusammen in das Fahrzeug eingebaut werden können. Nachteilig ist es hierbei, daß bei Wartungs- und Reparaturarbeiten das gesamte Triebwerk, der Kühllüfter und der Kühler aus dem Fahrzeug ausgebaut werden müssen, da der Kühllüfter und der Kühler den Zugang zu der Maschine behindern. Ist dieses schon störend und zeitraubend bei einer Werkstattwartung, so ist es bei einer Schlachtfeldsituation untragbar. Die einzige Alternative bietet der Ausbau des Kühlers und Kühllüfters, um einen Zugang zur Maschine zu gewinnen. Es wird hierbei jedoch erforderlich, das Kühlsystem wieder zu füllen, was unter Schlachtfeldbedingungen schwierig bzw. unmöglich ist. Ferner lassen sich viele Maschinenprobleme nicht erkennen bzw. beheben, ohne daß die Maschine in Betrieb genommen werden kann. Hierzu ist die Funktionsfähigkeit des Kühlsystems erforderlich.

Die der Erfindung zugrunde liegende Aufgabe wird darin gesehen, eine Kühleranordnung der eingangs genannten Art bereitzustellen, welche einen problemlosen Zugang zu von der Kühleranordnung abgedeckten Maschinenteilen ermöglicht. Insbesondere soll es bei Fahrzeugen möglich sein, die Kühlluft an der Fahrzeugoberseite einzusaugen und auszustoßen, wobei die Kühleranordnung in Normalstellung über dem Fahrzeugantrieb angeordnet werden kann. Die Kühleranordnung soll aus dieser Lage entfernt werden können, ohne daß die betriebsfähige Verbindung mit der Maschine unterbrochen wird.

Die Aufgabe wird erfindungsgemäß dadurch gelöst, daß das Gehäuse um eine Achse schwenkbar an der Halterung, beispielsweise dem Fahrzeugrumpf, gelagert ist. Koaxial zu der Schwenkachse des Gehäuses verläuft ein Wellenabschnitt, über den die Lüftereinrichtung angetrieben wird.

Damit läßt sich die in einem Gehäuse zusammengefaßte Einheit aus Lüftereinrichtung und Wärmetauscher so verschwenken, daß der Zugang zum Fahrzeugantrieb freigelegt wird. Bei entsprechender Auslegung brauchen die Kühlmittelleitungen hierbei nicht unterbrochen werden. Ferner kann eine Kraftzufuhr zu der Lüftereinrichtung ohne Unterbrechung erfolgen, auch wenn die gesamte Kühleranordnung aus ihrer Normallage verschwenkt wird.

Vorzugsweise sind Lüfter und Wärmetauscher seitlich benachbart zueinander in einem Gehäuse angeordnet, welches als eine beide Elemente miteinander verbindende Kammer ausgebildet ist, die als Strömungskanal zwischen den beiden Elementen dient. Der Luftstrom wird hierbei zwar im Gehäuse umgelenkt und kann nicht in fluchtender Linie durch die Kühleranordnung hindurchtreten, jedoch vermindert diese Ausbildung die Dicke des Gesamtkühlsystemgehäuses beträchtlich und hilft daher, die in vielen militärischen Anwendungen aufgestellten Anforderungen hinsichtlich knappen Raumes einzuhalten.

Zweckmäßigerweise befinden sich die Schwenkachsen in einem Bereich des Gehäuses, der die Lüftereinrichtung umschließt. Die Lage der Schwenkachsen kann so gewählt werden, daß ein leichtes Verschwenken der Kühleranordnung auch von Hand möglich ist.

Vorzugsweise erfolgt der Antrieb der Lüfteranordnung von dem Fahrzeugmotor aus.

Das Gehäuse der Kühleranordnung läßt sich vorzugsweise aus einer ersten Lage in eine zweite Lage verschwenken.

In der ersten Lage liegt die Kühleranordnung im wesentlichen horizontal und wenigstens über einem Teil des Fahrzeugantriebes, der aus Motor und Getriebe besteht. In der zweiten Lage ist die Kühleranordnung hochgestellt und im wesentlichen vertikal ausgerichtet. Sie ist dabei im wesentlichen neben dem Fahrzeugantrieb angeordnet, so daß ein Zugang zum Fahrzeugantrieb möglich ist.

Das Verschwenken der Kühleranordnung zwischen diesen beiden Lagen läßt sich rasch durchführen und ist bei laufendem Motor möglich, da die Kühleranordnung in zweckmäßiger Weise so ausgebildet werden kann, daß sie in beiden Lagen betriebsbereit ist.

Die Schlauchverbindungen zwischen Kühlsystem und Fahrzeugmotor werden zweckmäßigerweise flexibel ausgelegt, so daß sie das Verschwenken erleichtern.

Eine ausreichende Saugwirkung unter Einhaltung minimaler Abmessung der Kühleranordnung läßt sich in vorteilhafter Weise dadurch erhalten, daß zwei seitlich nebeneinander angeordnete Axiallüfter verwendet werden. Die Lüfterachsen sind dabei parallel ausgerichtet. Diese Ausbildung erfordert weniger Raum als eine Kühleranordnung, in der lediglich ein größerer Lüfter enthalten ist. Alternativ können natürlich auch Radiallüfter benutzt werden.

Die Zwei-Lüfter-Ausbildung läßt sich dadurch noch weiter verbessern, daß eine Trennwand im Strömungskanal vorgesehen ist, die jeden der beiden Lüfter mit einem Teilbereich des Wärmetauschers verbindet. Ferner ist es zweckmäßig, daß ein erster Lüfter direkt von dem Motor des Fahrzeuges angetrieben wird, während der zweite Lüfter mit dem ersten Lüfter in Verbindung steht und durch diesen angetrieben wird. Um einerseits einen freien Luftzutritt und -austritt zu ermöglichen, andererseits jedoch Beschädigungen durch auftreffende Geschosse zu vermeiden, ist es von Vorteil, auf einer dem Fahrzeugantrieb abgewandten Seite des Gehäuses ein Geschoßgitter anzuordnen.

Weitere vorteilhafte Ausbildungen der Erfindung sind den Unteransprüchen zu entnehmen.

Anhand der Zeichnung, die ein Ausführungsbeispiel der Erfindung zeigt, sollen die Erfindung sowie weitere Vorteile und vorteilhafte Ausgestaltungen der Erfindung näher beschrieben und erläutert werden.

Es zeigt:

Fig. 1 eine perspektivische Ansicht der erfindungsgemäßen Kühleranordnung, welche in eine aufgerichtete Position verdreht ist,

Fig. 2 eine perspektivische Ansicht gemäß Fig. 1, bei der die Kühleranordnung in einer abgesenkten Position dargestellt ist,

Fig. 3 eine Seitenansicht entlang der Linie 3-3 in Fig. 1,

Fig. 4 eine Draufsicht entlang der Linie 4-4 in Fig. 2,

Fig. 5 eine Querschnittsansicht entlang der Linie 5-5 in Fig. 4 und

Fig. 6 eine Querschnittsansicht entlang der Linie 6-6 in Fig. 4 mit einem ballistischen Gitter, welches oberhalb der Kühleranordnung plaziert ist.

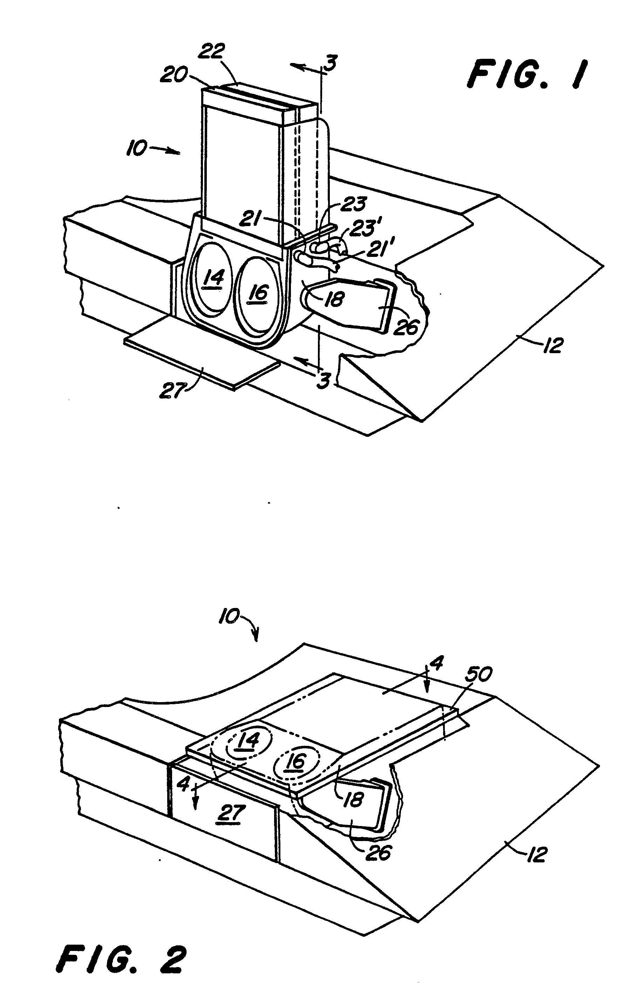

In den Fig. 1 und 2 ist eine erfindungsgemäße Kühleinheit 10 in einem Fahrzeugrumpf 12 dargestellt. Die Kühleinheit 10 enthält zwei Axiallüfter 14, 16, welche nebeneinander in einem Gehäuse 18 angeordnet sind. Seitlich benachbart zu den Lüftern 14, 16 sind Kühler 20, 22 in dem Gehäuse 18 angeordnet. In Fig. 1 sind zu den Kühlern 20, 22 hinführende hydraulische Verbindungsleitungen 21, 23 angedeutet. Diese enthalten hydraulische Schläuche 21', 23', welche eine hydraulische Verbindung zu dem Antriebsmotor herstellen und der besseren Übersichtlichkeit der Zeichnung wegen nur teilweise dargestellt wurden. Jeder konventionelle flexible Hydraulikschlauch ist hier geeignet, vorausgesetzt, daß eine genügend große Materialschleife vorhanden ist, die ein Verschwenken des Gehäuses 18 zwischen der aufgerichteten Position, wie sie in Fig. 1 gezeigt ist, und einer abgesenkten Position, wie sie in Fig. 2 dargestellt ist, erlaubt. An der Seite des Fahrzeugrumpfes 12 ist vorzugsweise eine verschwenkbare oder entfernbare Klappe 27 vorgesehen, so daß der erforderliche Raum freigegeben werden kann, um die Kühleinheit 10 zwischen ihrer aufgerichteten und abgesenkten Position zu verschwenken. Ein Antriebsmechanismus 26 liefert die Antriebskraft für die Lüfter 14, 16.

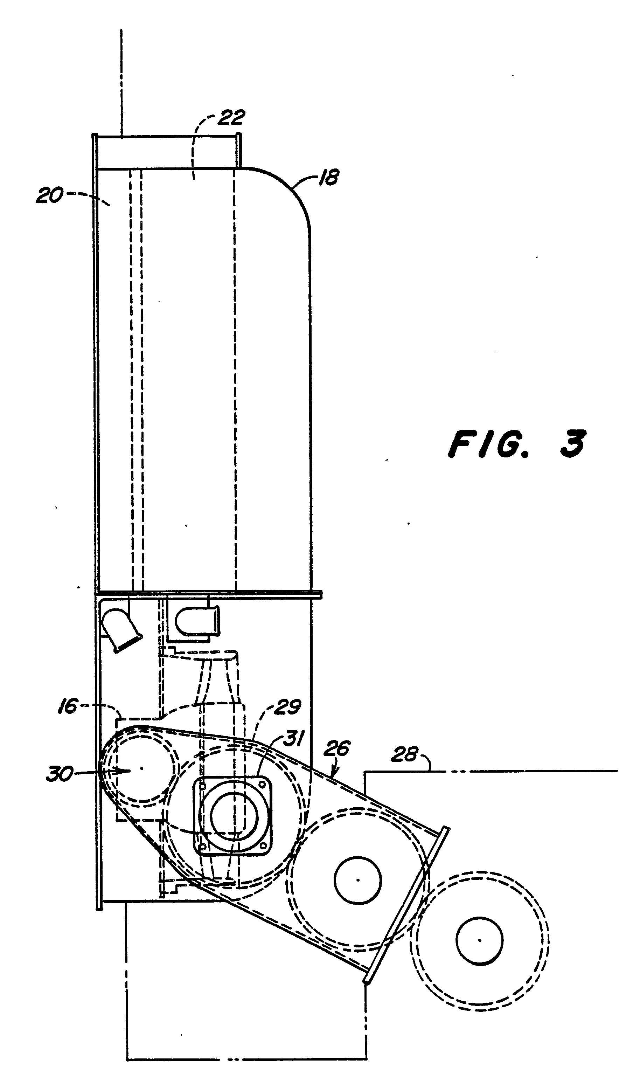

Wie es in Fig. 3 dargestellt ist, enthält der Antriebsmechanismus 26 vorzugsweise ein Zahnradgetriebe, welches den Fahrzeugmotor 28 mit der Antriebswelle 30 des Axiallüfters 14, 16 verbindet. Andere Alternativen, wie z. B. Riemenantriebe, können ebenfalls Verwendung finden. Eines oder mehrere der Zahnräder des Antriebsmechanismus 26, biespielsweise das Zahnrad eines Zwischengetriebes 29, kann zusätzlich dazu verwendet werden, eine Zusatzeinrichtung, wie beispielsweise eine Hydraulikpumpe oder einen elektrischen Generator, welche an dem Befestigungsteil 31 befestigbar sind, anzutreiben.

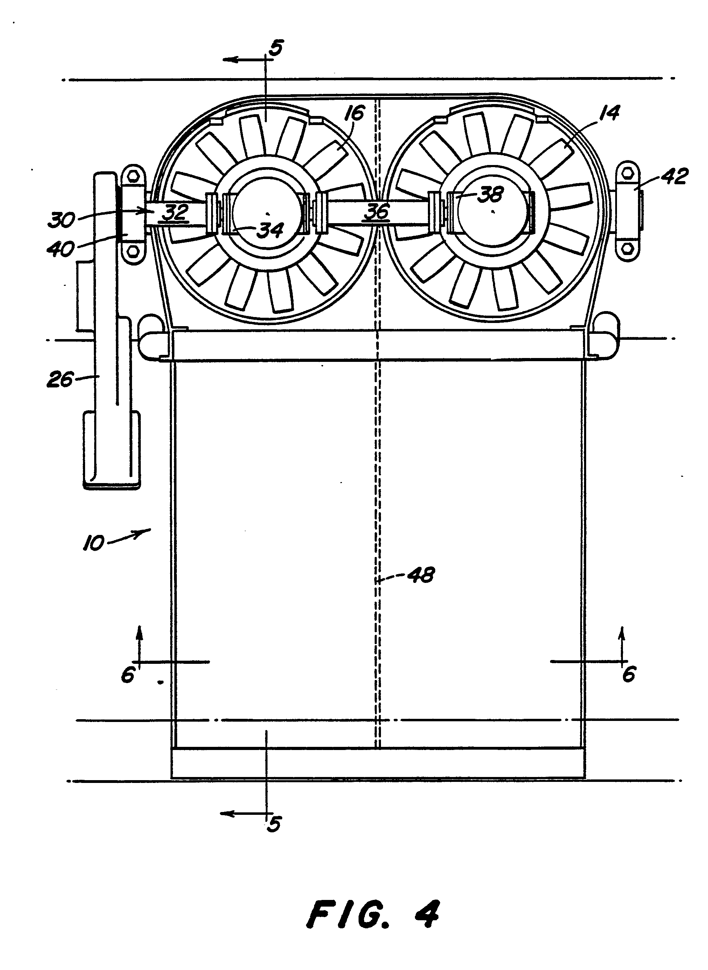

Gemäß der Darstellung in Fig. 4 handelt es sich bei der primären Antriebswelle 30 um eine herkömmlich ausgebildete Antriebswelle 32 über welche der erste Axiallüfter 16 durch geeignete Getriebemittel 34, angetrieben wird.

Das Getriebe 34 überträgt ferner Kraft an eine zweite Antriebswelle 36, welche über eine weitere geeignete Getriebeanordnung 38 mit dem Axiallüfter 14 in Verbindung steht. Die Kühleinheit 10 ist vorzugsweise verschwenkbar in einem Zapfenlager 40, 42 gelagert. Die Antriebswelle 30 liegt dabei vorzugsweise koaxial mit der Schwenkachse der Kühleinheit 10. Auf diese Art ist der Antrieb der Axiallüfter 14, 16 unbeeinflußt durch eine Verschwenkung der Kühleinheit 10 um ihre Schwenkachse.

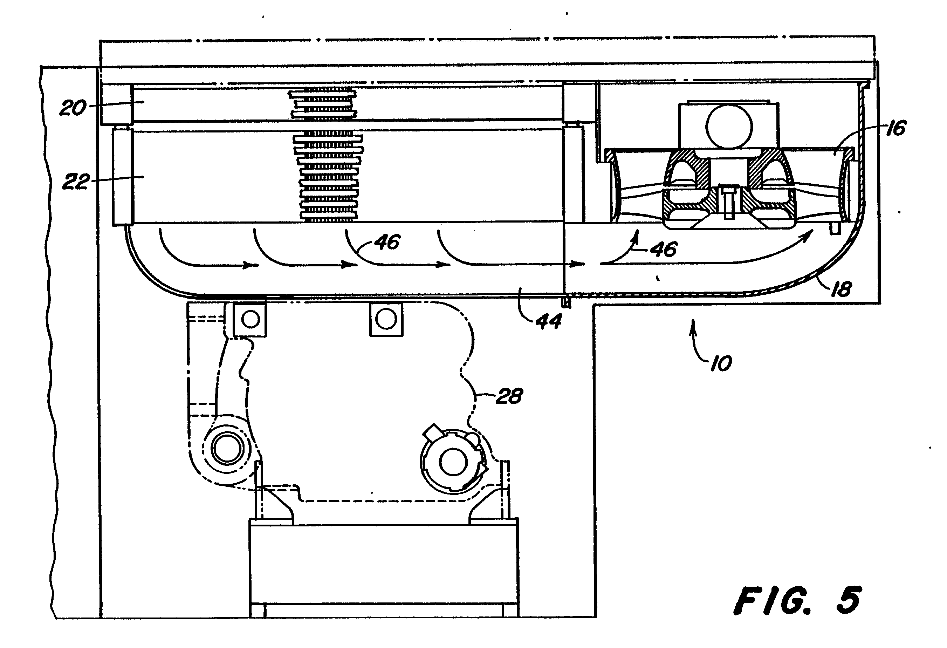

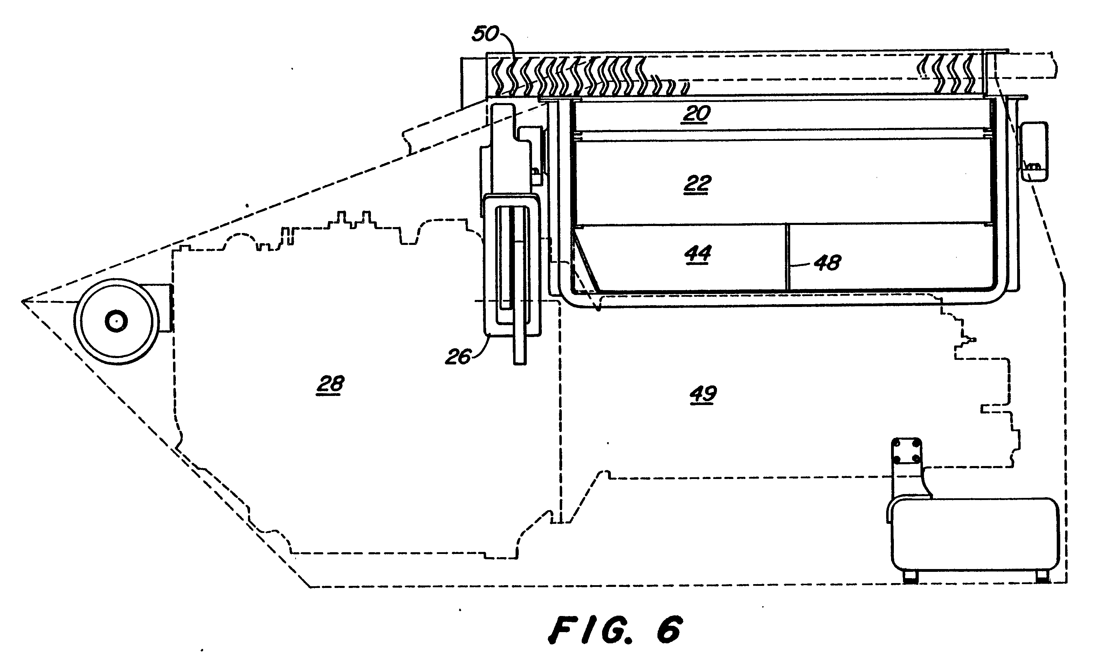

Wie aus Fig. 5 ersichtlich, ist in dem Gehäuse 18 eine Kammer 44 ausgebildet, die als Strömungskanal dient und die Rückseiten der hintereinander angeordneten Kühler 20, 22 mit den Axiallüftern 14, 16 verbindet. Die Pfeile 46 deuten an, daß Luft durch die Kühler 20, 22 und die Kammer 44 angesaugt und durch die Lüfter 14, 16 nach oben ausgestoßen wird. Falls es zweckmäßig erscheint, kann, wie in Fig. 4 und 6 dargestellt, dieser Durchfluß durch eine mittlere Trennwand 48 in zwei Strömungspfade kanalisiert werden, so daß die Kühlluft durch die beiden Axiallüfter 14, 16 durch getrennte Kanäle angesaugt werden kann.

Wenn dies beispielsweise bei militärischen Anwendungen gewünscht wird, kann, wie in Fig. 2 und 6 angedeutet ist, ein Geschoßgitter 50 vorgesehen werden, welches über der Kühleinheit 10 angeordnet ist und dieses vollständig abdeckt. Dieses Gitter 50 ist vorzugsweise entfernbar, um einen Zugang zu den Komponenten der Kühleinheit 10 zu ermöglichen. Das Gitter 50 kann völlig separat von der Kühleinheit 10 befestigt sein. Andererseits kann es auch als Teil der Kühleinheit 10 ausgebildet sein, so daß es gemeinsam mit der Kühleinheit 10 verschwenkbar ist. Durch eine geeignete Wahl der Ausrichtung der Lamellen des Geschoßgitters 50 kann die Wahrscheinlichkeit einer Rezirkulation der Luft zwischen den Lüftern 14, 16 und den Kühlern 20, 22 beträchtlich herabgesetzt werden.

Die Kühleinheit 10 kann durch geeignete Mittel verschwenkt werden. Hierzu dient beispielsweise ein kleiner Hydraulikzylinder, eine Handpumpe oder eine von Hand kurbelbare Umlaufspindel. Das Verschwenken kann auch direkt von Hand erfolgen, sofern die Schwerkräfte durch eine entsprechende Torsionswelle oder ein anderes gewichtsausgleichendes System kompensiert werden. Vorzugsweise erfordert der Schwenkmechanismus weder Motor noch Batterieleistung, da diese im Notfall möglicherweise nicht verfügbar ist. Die Kühleinheit 10 ist vorzugsweise zwischen zwei Positionen verschwenkbar. In der ersten Position liegt die Kühleinheit 10 vorwiegend über dem Antriebsmotor 28 und/oder dem Fahrzeuggetriebe 49 (siehe Fig. 6). In der zweiten Position ist die Kühleinheit 10 im großen und ganzen seitlich angrenzend zu dem Motor 28 und/oder dem Getriebe 49 angeordnet, wobei ein maximaler Zugang zu den Antriebsteilen ermöglicht wird.

Ein Fachmann ist ohne weiteres in der Lage, die vorliegende Erfindung in verschiedener Weise abzuändern. Beispielsweise können die in den Zeichnungen dargestellten Axiallüfter 14, 16 durch einen Transversallüfter ersetzt werden. Da Transversallüfter unmittelbar an ihren Achsenden angetrieben werden, können die Getriebe 34, 38 und die zusätzliche Antriebswelle 36 bei dieser Ausführungsform entfallen, sofern die Transversallüfter unmittelbar durch die erste Antriebswelle 32 angetrieben werden. In entsprechender Weise können mehr oder weniger Kühler und solche Kühler, die nicht lediglich einfache Flachkühler sind, vorgesehen werden. Es ist auch möglich, die Kühler und Lüfter hintereinander und nicht nebeneinander anzuordnen, obgleich dies die Gesamtdicke der Anordnung vergrößern würde.

**Ansprüche**

1. Kühleranordnung, insbesondere für einen Fahrzeugantrieb, welche an einer Halterung befestigt ist und in einem Gehäuse wenigstens eine angetriebene Lüftereinrichtung und wenigstens ein Wärmetauscherelement aufnimmt, wobei das Gehäuse einen Strömungskanal zwischen der Lüftereinrichtung und dem Wärmetauscherelement bildet; dadurch gekennzeichnet, daß das Gehäuse (18) um eine Achse schwenkbar an der Halterung gelagert ist und die Antriebsmittel für die Lüftereinrichtung (14, 16) wenigstens einen Wellenabschnitt (32) enthalten, der im wesentlichen koaxial zu der Schwenkachse verläuft.

2. Kühleranordnung nach Anspruch 1, dadurch gekennzeichnet, daß das Wärmetauscherelement (20, 22) seitlich angrenzend neben der Lüftereinrichtung (14, 16) angeordnet ist.

3. Kühleranordnung nach Anspruch 1 oder 2, dadurch gekennzeichnet, daß die Schwenkachse sich in einem Bereich des Gehäuses (18) befindet, der die Lüftereinrichtung (14, 16) umschließt.

4. Kühleranordnung nach einem der Ansprüche 1 bis 3, dadurch gekennzeichnet, daß die Lüftereinrichtung (14, 16) durch den Fahrzeugmotor (28) antreibbar ist.

5. Kühleranordnung nach einem der Ansprüche 1 bis 4, dadurch gekennzeichnet, daß das Gehäuse (18) zwischen einer ersten Lage, in der es im wesentlichen horizontal und wenigstens über einem Teil des Fahrzeugantriebes angeordnet ist, und einer zweiten Lage, in der es im wesentlichen vertikal und neben dem Fahrzeugantrieb angeordnet ist, verschwenkbar ist.

6. Kühleranordnung nach Anspruch 5, dadurch gekennzeichnet, daß die Kühleranordnung sowohl in der ersten als auch in der zweiten Lage betriebsbereit ist.

7. Kühleranordnung nach einem der Ansprüche 1 bis 6, dadurch gekennzeichnet, daß das Wärmetauscherelement (20, 22) mittels solcher Schlauchmittel mit dem Kühlersystem des Fahrzeugmotors (28) verbunden ist, die einen Kühlmitteltransport in jeder möglichen Schwenklage ermöglichen.

8. Kühleranordnung nach Anspruch 7, dadurch gekennzeichnet, daß die Schlauchmittel wenigstens einen flexiblen Schlauch (21′, 23′) mit einer Schleife enthalten, deren Durchhang ausreichend ist, um ein Verschwenken des Gehäuses (18) zwischen zwei extremen Positionen zu ermöglichen.

9. Kühleranordnung nach einem der Ansprüche 1 bis 8, dadurch gekennzeichnet, daß die Lüftereinrichtung wenigstens zwei seitlich nebeneinander angeordnete Axiallüfter (14, 16) enthält.

10. Kühleranordnung nach Anspruch 9, dadurch gekennzeichnet, daß eine erste im wesentlichen koaxial zur Schwenkachse ausgerichtete Antriebswelle (32) einen ersten Lüfter (16) mit einem Antriebsmotor (28) verbindet und eine zweite Antriebswelle (36) zwischen dem ersten Lüfter (16) und einem zweiten Lüfter (14) angeordnet ist.

11. Kühleranordnung nach Anspruch 9 oder 10, dadurch gekennzeichnet, daß eine Trennwand (48) vorgesehen ist, die den Strömungskanal (44) in zwei getrennte Kanäle unterteilt, welche den ersten Lüfter (16) und den zweiten Lüfter (14) jeweils mit einem Teilbereich des Wärmetauscherelementes (20, 22) verbinden.

12. Kühleranordnung nach einem der Ansprüche 1 bis 11, dadurch gekennzeichnet, daß auf einer dem Fahrzeugantrieb abgewandten Seite des Gehäuses (18) ein Geschoßgitter (50) angeordnet ist.

FIG. 1

FIG. 2

*FIG. 3*

FIG. 4

FIG. 5

FIG. 6